# EUROPEAN PATENT APPLICATION

(11) **EP 2 680 558 A1**
(43) Date of publication of application: **01.01.2014**
(21) Application number: 12305754.9
(22) Date of filing: 27.06.2012
(51) Int. Cl.: H04M 15/00

(54) **Charging system for telecommunication networks**

(71) Applicant: Martel, Franck, 06200 Nice (FR)
(72) Inventor: Martel, Franck, 06200 Nice (FR)
(74) Representative: Hautier, Nicolas

(57) **Abstract**

A charging system for a telecommunication system operator comprising: a charging node (CN) module located in a first network (N1), the first network (N1) being the telecommunication network being operated by the said telecommunication system operator, the charging node (CN) module being configured to receive at least one charging event (CE) for each telecommunication product and service provided and to calculate a charging value (CV) associated to said charging event based on charging event details and on charging configuration data, a charging cloud (CC) module, remotely located from said charging node (CN) module and implemented as a cloud computing application delivered over a second network (N2), separate from said first network (N1), said second network (N2) being a network supporting cloud computing applications, said charging cloud (CC) module comprising at least a storage means storing a database comprising charging configuration data required to calculate charging values (CV) of charging events, said charging cloud (CC) module being configured to be accessed through the second network (N2) for updating said charging configuration data, and a charging link (CL) configured to enable communication and synchronization between said charging node (CN) module and said charging cloud (CC) module.

## Description

The invention concerns a charging system. A charging system is typically used by a telecommunication system operator, also known as a Communications Services Provider, to determine the amount to be charged to a customer when a product or service is delivered to him.

As is known in the art of telecommunication systems, a telecommunication system operator operates a telecommunication network and system to provide telecommunication products and services to its customers. A charging system is then used to calculate a charge for any telecommunication product or service that the telecommunication system operator provides to a customer. To do so, for each telecommunication service provided to a customer, a charging event is produced by network equipments. A charging event can be an electronic record (usually called Event Detail Record, EDR, or Call Detail Record, CDR) or a message transmitted in real-time by a signalling protocol (for example SS7 or diameter protocols). A charging system is configured to receive details from such a charging event and to calculate a charging value associated to said events corresponding to said telecommunication service according to the commercial terms of the contract with the said customer. The charging value may be a time duration, a monetary amount or an arithmetical value. For customers on a prepaid offer, the charging system will deduct the said charging value from the customer balance. For customers on post-paid offer, said charging value may later be transmitted to a billing system which accumulates charging values for a certain period (e.g. a month) to bill said customer accordingly at the end of the period.

Typically, the charging value calculation of an individual charging event is based on input data also called attributes that characterize the charging event (such as for instance the nature, the time and date, the duration of the service etc.), customer account information related that typically depends on his contract, and price agreed in a prepaid offer or a post-paid contract using internal data structures. For calculating the charging value, the charging system typically requires the operation of various components such as a rating engine, data structures containing products & services' characteristics, rate plans, price lists, and customers' information, and software modules to update those data structures and to interface with other systems and with users of the charging system.

The charging is a key function in a telecommunication system. Due to very large volume of telecommunication services and corresponding charging events to manage, the charging function must be located near the network equipment. Indeed, at some peak periods, a telecommunication operator has to cope with several thousands of calls requested per second, each call generating at least one charging event. Furthermore, the charging function must be processed in real time to cope with prepaid customers, cost control regulations and on-demand services. In addition, since it deals with sensitive customer information (e.g. who called whom) and with money, confidentiality, security and integrity of data managed must be guaranteed. For all these reasons, such a charging system is located within or near the core network of the telecommunication system operator, i.e., the charging system is internal to the telecommunication system operator's premises.

In addition, fast processing of the event detail records is very important in the case of pre-paid services. When a customer uses pre-paid services he has first to top up a balance, for example through buying a voucher or prepaid card, before using a telecommunication service. As he is using the telecommunication services, his balance is decremented by the charging system usually referred to as a prepaid platform. Therefore, the balance must be regularly decremented and checked while services are used, which requires real-time processing or near real-time processing. Additionally, some systems operate a check of the balance upon any request for telecommunication service and deliver an authorization based on this check. Typically, each time a customer wants to give a phone call, the prepaid platform first checks whether the balance is sufficient to allow the call and then actually enables the call to process if the balance is sufficient. In addition, in the most advanced telecommunication systems, the calculation of the charging value and the computation of the balance can be invoked several times during the delivery of a service (e.g. each minute for a voice call). Thus, in order to be transparent to the customer, the prepaid platform must perform these steps of checking, sending an authorization and decrementing the balance within a very short time, typically few milliseconds. Therefore the prepaid platform of the prior art, comprising all its components among which the rating engine data structures containing products & services' characteristics, rate plans, price lists, and customers' information, and software modules to update those data structures and to interface with other systems and with users of the prepaid platform. are necessarily located within or very near the core network of the telecommunication system operator, i.e., in the premises of the telecommunication system operator.

To ensure a fast processing of large volumes of event detail records, some telecommunication system operators have implemented in their premises a charging system dedicated for each type of services or payment methods. For example, a prepaid platform for prepaid mobile services, one rating engine for fixed telephony, another one for cable television, another one for post-paid mobile phones etc.

However, cloud computing and software as a service (usually referred to as its acronym SaaS), are very promising solutions in many domains. E.g. they can offer large amounts of cheap computing power, and also, among others, the possibility to access from any web connected device. As a consequence, it might be interesting to build a charging system able to benefit from cloud computing and from software as a service, SaaS, solutions. However, despites its numerous advantages, cloud computing applications could not either guarantee confidentiality, security and integrity of data or be suitable for large volume or real time processing. Indeed, details for each charging event would be sent through a network to the charging system located in the cloud which would prevent meeting the short time latency and the security requirements. Therefore, such solutions based on cloud computing would necessarily be limited to telecommunication services that do not require real-time processing, large volume of charging events to handle and data security. Services such as postpaid video on demand could be possible candidate for such solutions where the charging system would be provided from cloud computing. Indeed, for postpaid video on demand it may be acceptable to have a latency between the request for the service and the acceptance of the service. In addition, the volume of requests for video on demand usually does not exceed few hundreds or thousands per day. In comparison phone calls require a very short latency between the request for a call and the acceptance for the set up of the call and several thousands of calls can be requested per seconds.

To overcome these drawbacks, the main idea of the invention is to part a charging system into two separate modules linked together: a charging node module located in the premises of the telecommunication system operator is in charge of all the functions for which fast processing and security are required, and a charging cloud module located in the cloud is in charge of all the remaining functions. A dedicated virtual link enables communication and synchronisation between said charging node module and said charging cloud module.

One object of the invention is a charging system for a telecommunication system operator comprising: a) a charging node module located in a first network, the first network being the telecommunication network providing telecommunication products and services for which this charging system is needed, the charging node module being configured to receive charging events for each telecommunication service provided and to calculate a charging value associated to said charging event preferably based on attributes that characterize the charging event and on charging configuration data; b) a charging cloud module, remotely located from said charging node module and implemented as a cloud computing application delivered over a second network, separate from said first network, said second network being a network supporting cloud computing applications, said charging cloud module comprising at least a storage means storing a database comprising charging configuration data required to calculate charging values of telecommunications products and services, said charging cloud module being configured to be accessed through the second network for updating said charging configuration data; and c) a charging link configured to enable communication and synchronization between said charging node module and said charging cloud module allowing thereby propagation of the charging configuration data from the database of the charging cloud (CC) to charging node (CN), and preferably allowing also the propagation of charging values (CV) or customer balances from the charging node (CN) to the charging cloud (CC) for reporting purposes.

As can be seen in prior art, all charging systems are unitary, autonomous and entirely located in the premises of the telecommunication system operator. Said charging systems work without any problem. Accordingly, nothing hints the one skilled in the art into such a partition of the charging system.

According to another embodiment, the invention relates to a telecommunication system comprising: the charging node, the charging cloud and preferably the charging link.

Optionally, the invention may comprise at least one of the following features:
- the second network is a public network, such as internet, or a private network, or a hybrid network;
- preferably, the customers that receive services from the first network cannot access the second network.
- preferably, the users that provide charging data to the charging cloud through the second network cannot access the first network.
- the first and second networks are separate means that the first network cannot be accessed through the second network. Preferably, the second network cannot be accessed through the first network. Thus, a device receiving telecommunication services from the first network cannot access the second network.
- the charging link is a secured connection;
- the charging link is a virtual private network created in the second network;
- the charging node (CN) module is configured to update its charging configuration data only through receiving the charging configuration data via the charging link (CL). More generally, the charging node (CN) module is configured to be accessed remotely for updating its data, excepted for technical maintenance reasons.
- the charging node module is configured to send the calculated charging value to a billing module that is located either in the first network or in the second network;
- said charging value is either a monetary value, a time duration, or an arithmetic value, i.e., a counter;
- The first network includes a collection of terminals, links and switching nodes which connect to enable telecommunication between users of the terminals.

The switching nodes are designed, among other functions, to produce charging events or event detail records, or to send equivalent messages using a signalling protocol, to charging systems as they provide their connectivity services. This is a way to generate charging events.
- Preferably; the event comprises at least any one of the following attributes that characterize the event: the event duration for instance in seconds (e.g. for a call), or the size in bytes of the data being transmitted during the event (e.g. for email download).
- Advantageously, the charging node (CN) is located within the telecommunication system operator's premises (P) and the charging cloud (CC) is located outside the telecommunication system operator's premises.
- the charging node module is configured to handle any one of the following functions:
   - guiding: matches each incoming charging event to a customer account in a customer database, so to determine which customer account should be charged for the telecommunication product or service provided corresponding to said event;
   - authorization of charge: get authorization for a telecommunication product or service prior to its delivery for a customer account;
   - charge calculation: determines the charging value of a charging event corresponding to the delivery of a telecommunication product or service;
   - balance management: maintains customer account balances so to deduct a charging value incurred from consumed telecommunication products and services, or to credit said customer account when it is topped up;
- the charging cloud module is configured to handle any one of the following functions:
   - customer management: allows to create, modify or delete customer accounts, so to determine which charging value should be incurred for each telecommunication product or service by each customer depending of the account type, among a prepaid account or a postpaid account;
   - telecommunication products and services configuration: allows to create, modify or delete telecommunication products and services' characteristics;
   - rate plan maintenance: allows to create, modify or delete rate plans, defining charging value depending on telecommunication product or service;
   - price list configuration: allows to create, modify or delete list of prices defined in rate plans, and used to calculate the charging value of any telecommunication product or service.
   - user interface: allows users of the charging system (i.e., agents of the telecommunication operator) to configure it for their needs. Such user may be for example a business analyst in charge of maintaining rate plans and list prices, or marketing specialist in charge of defining new commercial telecom products and services.
   - Application Programming Interface to let other systems to interface with the charging system when required. For example a CRM (Customer Relationship Management) and Order Management systems can use an interface to top up a customer balance or to provision customers, products, services, rate plans and tariff data into the charging system.

Preferably, the attributes that characterize the charging event comprise at least one of: a type of the charging event, a duration of the charging event, a volume of data of the charging event, the hour and day of the charging event. According to an embodiment, the attributes that characterize the charging event are comprised in an event detail record (EDR) or in a call detail record (CDR). According to another embodiment, the attributes that characterize the charging event are transmitted by the signalling protocol.

According to another embodiment, the invention encompasses only one module among the charging node module and the charging cloud module.

According to another embodiment, it is provided a method of operating a telecommunication charging system of the invention **characterized in that** it comprises the following steps: receiving, at the charging cloud (CC) module operating as cloud computing application, charging configuration data required to calculate charging values (CV) of charging events (CE), said charging configuration data being received over the second network (N2); propagating said data from the charging cloud (CC) to the charging node (CN) through the charging link (CL); using said data at the charging node (CN) in conjunction with event detail records (EDR) or equivalent signalling protocol message to calculate charging values.

Preferably, the charging configuration data are received by the charging node (CN) from the charging cloud (CC) over the second network (N2) via a user interface or via an interface for interfacing the charging cloud (CC) with other computerized systems.

Preferably, the method comprises propagating charging values (CV) and customer balances from the charging node (CN) to the charging cloud (CC). This step is for instance performed when a user wants to verify the balance of a specific customer.

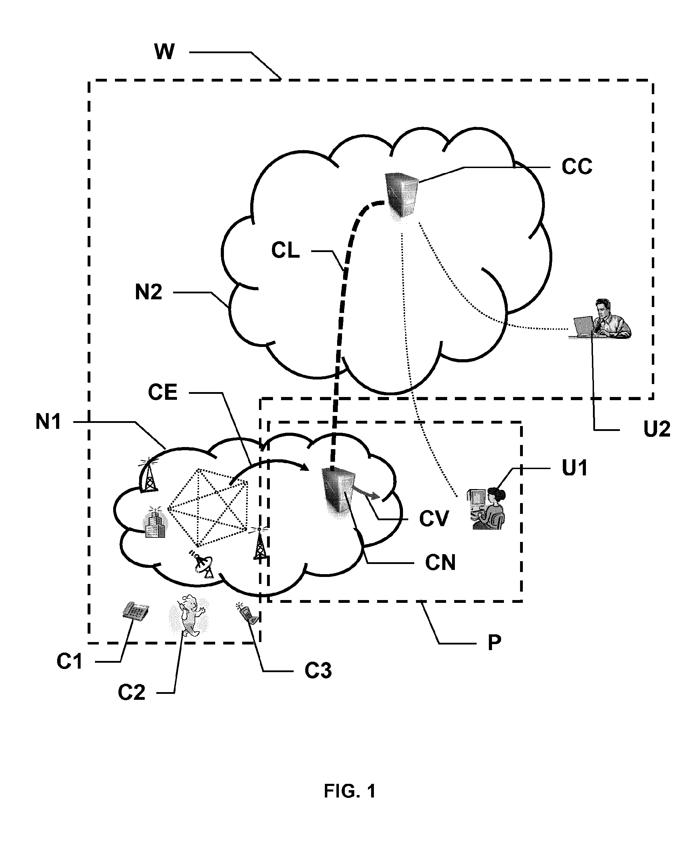

Others features, details and advantages of the invention will become more apparent from the detailed illustrating description given hereafter with respect to the drawing on which figure 1 shows a diagram figuring one embodiment of the invention.

Figure 1 schematically depicts a telecommunication system operated by a telecommunication system operator according to an embodiment of the invention. Said telecommunication system mainly comprises a telecommunication network N1. Said telecommunication network N1 is partly located in the telecommunication system operator premises P. There are located the main computational resources necessary to operate said telecommunication system. From there the telecommunication system spreads over at least a part of the remaining world W, so as to be able to provide telecommunication services to customers C1, C2, C3.

Prior art charging systems were entirely contained in said telecommunication system operator premises P.

According to the invention, the charging system is split into three main parts. The first part is a charging node CN module located in a first network N1, said first network being a telecommunication network offering telecommunication services to customers C1-C3 of the telecommunication system operator operating said telecommunication network N1 for which this charging function is needed. Said telecommunication services are for instance any one of: phone calls, short message services (SMS), multimedia messaging services, video on demand etc.

Said charging node CN module is preferentially located in the premise P part of said first network N1.

Said charging node CN module is configured to receive, for each telecommunication service provided to a customer C1-C3, at least one charging event CE, and to calculate a charging value CV associated to said event. Said charging value CV may be written into a record for later on processing by a billing system or alternately the charging value CV may be used to update the customer balance stored in the charging node CN (for prepaid customers).

Typically, the first network N1 is a telecommunications network (mobile, landline, cable, etc. or combination of those) operated by a service provider to provide communications services which are charged to customers for a fee, hence the service provider's need for a charging system.

The second part is a charging cloud CC module, remotely located and separated from said charging node CN module, and implemented as an on-demand cloud computing application delivered over a second network N2, separate from said first network, said second network N2 being a network supporting cloud computing application. Said second network N2 is a general purpose data communication network, which is not dedicated to the charging function. For instance, it can be either a public network, such as internet, or it can also be a private network. The network N2 is typically operated by a third party which is not the telecommunications service provider owning network N1 (although it can be, but this is an exception rather than the rule).

The third part is a charging link CL. Said charging link CL is a communication link configured to enable communication and synchronization between said charging node CN module and said charging cloud CC module.

Said charging link CL is advantageously a secured connection. This feature guarantees that the charging link CL in not a breach in the security and integrity of the whole charging system.

One possible embodiment of the charging link CL is to implement said charging link CL through the use of a virtual private network, VPN. Said virtual private network is advantageously created in the second network N2.

The charging cloud CC module comprises at least a storage means storing a database comprising charging configuration data required to calculate charging values CV for delivered products & services. Charging configuration data comprise e.g. customer account information, rate plans and price lists. Said charging cloud CC module is configured to be accessed by users of the charging system using their web browsers through the second network N2. Said access is used by remotely located users U1-U2, e.g. for updating said charging configuration data. A user U1-U2 is here an employee or a contractor of the telecommunication system operator. Such a user U1-U2 is typically in charge of maintaining said telecommunication system up to date and operating.

It is important to notice here that such a user U1-U2 may be either in the premises P of the telecommunication system operator, as figured by "local" user U1, or be quite everywhere else in the remaining world W, as figured by "distant" user U2. In both cases, a user U1-U2 may only interact with the charging system through a connection to said charging cloud CC module, that is, through the second network N2. Both types, local U1 or distant U2, users interact with the charging system through a distant connection through the second network N2.

According to a preferred embodiment, this is obtained by a configuration of the charging node CN that cannot be accessed directly by a user U1-U2. Instead the charging system can only be accessed by a user U1-U2 through a connection to the charging cloud CC module, which in turn dialogs with the charging node CN through the charging link CL. This is the nominal functioning for nominal operation of the charging system, as applied by said users U1-U2, mainly comprising updating of charging configuration data as contained in charging cloud CN module.

An exception can be provided, allowing direct connection to said charging node CN but strictly limited to technical maintenance reasons.

Said charging node CN module is configured to receive charging events CE from the telecommunication network N1 each time a telecommunication service is delivered to a customer C1-C3. In response the charging system computes an associated charging value CV. To do so, the charging node CN module may consults the updated charging configuration data as updated through the charging configuration data propagated from the charging cloud CC module through said charging link CL. This allows the charging node CN module to compute an associated charging value CV.

Then, in a possible embodiment, the charging node CN module sends said calculated charging value CV to a billing module (not illustrated) for post-paid customers, or use the calculated charging value CV to update the balance of prepaid customers. Said billing module may indifferently be located either in the first network N1 or in the second network N2.

A charging system is clearly different from a billing system. When a charging system individually rates a telecommunication service with a charging value CV, a billing system gathers all said charging values CV for a given customer C1-C3 and produces a single global bill for a certain period (typically a month).

The charging value CV calculated by the charging system is indicative of the future billing cost of the telecommunication service. It may however be expressed in different units. E.g. it can be expressed directly in a monetary unit, as the monetary amount to be paid or in any other monetary unit which can be converted into it. It may also be expressed in another measuring unit indicative of an amount of service which can be converted into monetary amount to be paid. E.g. it can be expressed as a time duration.

All the functions of a charging system are, according to the invention, parted into two categories, one category being served by the charging node CN module, and the other being served by the charging cloud CC module. As a main guideline, the charging node CC module is in charge of the functions either needing real time computation or needing large volume of computation or manipulating critical data which cannot take the risk of being divulgated or which cannot be treated by the charging cloud CC module. On the contrary, the charging cloud CC module is in charge of the functions either managing the configuration of the charging system or interfacing with a user U1-U2 or all the remaining functions which cannot be treated by the charging node CN module.

The charging node CN module can serve at least any one of the following functions:

A guiding function. Such a function is in charge, when an incoming charging event is received, to match it to a customer account. A customer database typically gathers all the customer accounts. This matching is the first step toward a determination of which customer C1-C3 should be charged for a telecommunication service provided corresponding to said event.

An authorization of charge function. Such a function is in charge of getting authorization to deliver a telecommunication service to a given customer C1-C3. Such an authorization can be asked by the telecommunication network for a telecommunication service prior to its delivery. Such behaviour typically corresponds to a customer account of the prepaid type, that is, to a customer that has prepaid for the use of at least some of the telecommunication services offered by the telecommunication network N1. Since it is a prepaid customer account, the delivery of the telecommunication service may be authorized only if the balance of said customer account is above a given threshold. So, before an authorization is given, said function may check the balance of said customer account. It can be noted that this function can be invoked by the telecommunication network before any delivery, but also several times during the delivery of a telecommunication service. A telecommunication network may opt to ask an authorisation clearance e.g. each minute during the course of a voice call.

A charge calculation (also known as rating) function. Such a function is in charge of determining for each individual charging event, such event being here a step towards the delivery of a telecommunication product or service, its charging value CV. Said charging value CV of an individual event may e.g. be based on data defining the type and range of said telecommunication service, customer account information, and charging price agreed in a prepaid offer or postpaid contract, using internal data structures. It can be noted that this function can be invoked by the telecommunication network at least before the beginning or after the end of a delivery of a telecommunication service, but also several times during the delivery of a telecommunication service, especially for a long lasting or high charging value CV telecommunication service.

A balance management function. Such a function is in charge of maintaining customer account balances. It is useful typically for a prepaid customer account. In such a case, said function deducts a charging value CV incurred from consumed telecommunication service. It may also credit a customer account when a customer tops up its customer account.

Preferably, the charging node CN module serves all the above mentioned functions.

The charging cloud CC module can serve at least any one of the following functions:
A customer management function. Such a function is in charge of allowing to create, modify or delete customer accounts, to be able to determine which charging value CV should be incurred for each telecommunication service by each customer depending on his customer account type, among a prepaid account or a postpaid account.

A telecommunication service configuration function. Such a function is in charge of allowing to create, modify or delete telecommunication products & services' parameters. A telecommunication product or service, including its parameters, is defined to be delivered to a customer C1-C3. A telecommunication product or service may be either prepaid or subscribed by a customer C1-C3. Examples of telecommunication products & services are e.g.: voice telephony, fax, mobile phone, SMS, broadband connection, television, leased lines, etc.

A rate plan maintenance function. Such a function is in charge of allowing to create, modify or delete rate plans. A rate plan, with its parameters included, defines the business rules defining the charging value CV to associate to a telecommunication service. It may depend on other criteria defined in price lists and contracts. Said criteria may be defined among e.g. fixed costs, recurring costs, duration, destination party, peak time vs. off-peak, etc., which helps determining a charging value CV to associate to a telecommunication service defined by details from its charging event.

A price list configuration function. Such a function is in charge of allowing to create, modify or delete list of prices defined in rate plans. Said list of prices are then used to calculate the charging value CV of any telecommunication service. For example, for an international fixed voice call, the charging value CV may be typically determined by the destination country, and an international call price list can define a charging value CV of 1 minute of communication for each country (e.g. 10 cents for Italy, 12 cents for Turkey, 15 cents for Angola, etc.).

A user interface function: allows users of the charging system to configure it for their needs. Such user may be for example a business analyst in charge of maintaining rate plans and list prices, or marketing specialist in charge of defining new commercial telecom products & services.

An Application Programming Interface function to let other systems to interface with the charging system when required. For example a CRM (Customer Relationship Management) and Order Management systems can use this interface to top up customer balances or to provision customer, products, services, rate plans and tariff data into the charging system.

Preferably, the charging cloud CC module serves all the above mentioned functions.

From the above description, it appears clearly that the present invention allows telecommunication system operators to take advantage of the cloud computing paradigm, in particular in term of accessibility for configuration data management, flexibility and scalability while still providing short time processing of charging events and maintaining the security of the event details.

While there is shown and described the present preferred embodiment of the invention, it is to be distinctly understood that this invention is not limited thereto but may be variously embodied to practice within the scope of the following claims.

## Claims

1. A charging system for a telecommunication system operator comprising :
- a charging node (CN) module located in or connected to a first network (N1), the first network (N1) being a telecommunication network providing telecommunication products and services to customers, the charging node (CN) module being configured to receive from the first network (N1) at least one charging event for each telecommunication product or service provided and to calculate a charging value (CV) associated to this charging event based on attributes that characterize the charging event and on charging configuration data,
**characterized in that** it further comprises:
- a charging cloud (CC) module, remotely located from said charging node (CN) module and implemented as a cloud computing application delivered over a second network (N2), separate from said first network (N1), said second network (N2) being a network able to support cloud computing applications, said charging cloud (CC) module comprising at least a storage means storing a database comprising charging configuration data required to calculate charging values (CV) of telecommunications products and services, said charging cloud (CC) module being configured to be accessed through the second network (N2) by users for updating said charging configuration data, and
- a charging link (CL) configured to enable communication and synchronization between said charging node (CN) module and said charging cloud (CC) module, allowing thereby propagation of the charging configuration data from the database of the charging cloud (CC) to charging node (CN), and allowing the propagation of charging values (CV) or customer balances from the charging node (CN) to the charging cloud (CC) for reporting purposes.

2. The system according to claim 1, where the second network (N2) is a public network, such as internet, a private network, or a hybrid network.

3. The system according to claim 1 or 2, where the charging link (CL) is a secured connection.

4. The system according to any one of claims 1 to 3, where the charging link (CL) is a virtual private network (VPN) created in the second network (N2).

5. The system according to any one of claims 1 to 4, where the charging node (CN) module is configured to update its charging configuration data only through receiving the charging configuration data via the charging link (CL).

6. The system according to any one of claims 1 to 5, where the charging node (CN) module is configured to send calculated charging value (CV) to a billing module that is located either in the first network (N1) or in the second network (N2).

7. The system according to claim 6, wherein said charging value (CV) is either a monetary value, a time duration or any arithmetical value.

8. The system according to any one of claims 1 to 7, where the charging node (CN) module is configured to handle any one of the following functions:
- guiding: matches each incoming charging event to a customer account in a customer database, so to determine which customer account should be charged for the telecommunication product or service provided corresponding to said charging event;
- authorization of charge: get authorization for a telecommunication product or service prior to its delivery;
- charge calculation: determines the charging value (CV) of a charging event corresponding to the delivery of a telecommunication product or service;
- balance management: maintains customer account balances so to deduct a charging value (CV) incurred from consumed telecommunication product or service, or to credit said customer account when it is topped up.

9. The system according to any one of claims 1 to 8, where the charging cloud (CC) module is configured to handle any one of the following functions:
- customer management: allows to create, modify or delete customer accounts, so to determine which charging value (CV) should be incurred for each telecommunication product or service by each customer depending of the account type, among a prepaid account or a postpaid account;
- telecommunication product and service configuration: allows to create, modify or delete telecommunication products and services;
- rate plan maintenance: allows to create, modify or delete rate plans, defining charging value (CV) depending on telecommunication products or services;
- price list configuration: allows to create, modify or delete list of prices defined in rate plans, and used to calculate the charging value (CV) of any telecommunication products and services;
- user interface: allows users of the charging system to configure it for their needs;
- Application Programming Interface to let other systems to interface with the charging system when required.

10. The system according to any one of claims 1 to 9, where the charging node (CN) is located within the telecommunication system operator's premises (P) and where the charging cloud (CC) is located outside the telecommunication system operator's premises.

11. The system according to any one of claims 1 to 10, where the attributes that characterize the charging event comprise at least one of: a type of the charging event, a duration of the charging event, a volume of data of the charging event, the hour and day of the charging event.

12. The system according to any one of claims 1 to 11, where the attributes that characterize the charging event are comprised in an event detail record (EDR) or in a call detail record (CDR).

13. The system according to any one of claims 1 to 11, where the attributes that characterize the charging event are transmitted by the signalling protocol.

14. A method of operating a telecommunication charging system according to any one of the preceding claims **characterized in that** it comprises the following steps:
- receiving, at the charging cloud (CC) module operating as a cloud computing application, charging configuration data required to calculate charging values (CV) of charging events, said data being received over the second network (N2) via a user interface or via an interface for interfacing the charging cloud (CC) with other computerized systems,
- propagating said data from the charging cloud (CC) to the charging node (CN) through the charging link (CL),
- using said data at the charging node (CN) in conjunction with charging event details to calculate charging values.

15. The method according to the preceding claim, comprising propagating charging values (CV) and customer balances from the charging node (CN) to the charging cloud (CC).
